(19) Europäisches Patentamt
European Patent Office
Office européen des brevets

(11) Numéro de publication: **0 005 397**
**B1**

(12) **FASCICULE DE BREVET EUROPEEN**

(45) Date de publication du fascicule de brevet: **02.09.81**

(21) Numéro de dépôt: **79400270.9**

(22) Date de dépôt: **25.04.79**

(51) Int. Cl.³: **C 09 K 3/34,** G 02 F 1/13, G 02 F 1/03

(54) **Cristal liquide à grande anisotropie diélectrique négative et dispositif électro-optique comportant un tel cristal liquide.**

(30) Priorité: **08.05.78 FR 7813519**

(43) Date de publication de la demande:
**14.11.79 Bulletin 79/23**

(45) Mention de la délivrance du brevet:
**02.09.81 Bulletin 81/35**

(84) Etats Contractants Désignés:
**CH DE GB NL**

(56) Documents cités:
**DE - A - 2 544 577**
**FR - A - 2 347 427**
**FR - A - 2 377 441**

(73) Titulaire: **THOMSON-CSF**
**173, Boulevard Haussmann**
**F-75360 Paris Cedex 08 (FR)**

(72) Inventeur: **Dubois, Jean Claude**
**"THOMSON-CSF" - SCPI 173, Bld Haussmann**
**75360 Paris Cedex 08 (FR)**
Inventeur: **Nguyen Huu, Tinh**
**"THOMSON-CSF" - SCPI 173, Bld Hausmann**
**75360 Paris Cedex 08 (FR)**
Inventeur: **Zann, Annie**
**"THOMSON-CSF" - SCPI 173, Bld Haussmann**
**75360 Paris Cedex 08 (FR)**

(74) Mandataire: **Giraud, Pierre et al,**
**"THOMSON-CSF" - SCPI 173, bld Haussmann**
**F-75360 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Cristal liquide à grande anisotropie diélectrique négative et dispositif électro-optique comportant un tel cristal liquide.

L'invention concerne une famille de cristaux liquides à grande anisotropie diélectrique négative, présentant des mésophases variées, par exemple smectiques de type A et/ou C, et nématiques.

On sait que les cristaux liquides négatifs sont utilisables dans divers dispositifs de visualisation, notamment:

a) en phase nématique, par effet de diffusion dynamique de la lumière;

b) en phase smectique de type A et nématique, par effet de champ permettant de réaliser des dispositifs d'affichage à mémoire.

On connait, par la publication 2 347 427 de la demande française de brevet d'invention, une famille de cristaux liquides de formule:

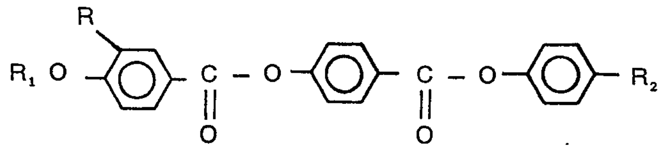

dans laquelle R est un atome de brome ou l'un des groupements $NO_2$ et CN avec $R_1$ et $R_2$ désignant des alkyls possédant de 1 à 10 atomes de carbone. Ces cristaux liquides sont négatifs mais ne présentent généralement pas de phase smectique.

L'invention permet d'obtenir des cristaux liquides présentant de telles mésophases avec une anisotropie diélectrique fortement négative et d'une grande stabilité, ce qui constitue un avantage dans de nombreuses applications, et permet, en mélangeant de tels cristaux liquides avec d'autres cristaux liquides nématiques à faible anisotropie diélectrique, d'élargir la gamme de température de la mésophase, tout en obtenant des propriétés convenant à l'application recherchée.

La structure chimique centrale de la famille de composés selon l'invention comporte un premier noyau: 1-benzoyloxy et un deuxième noyau: 2-phényléthane et des substituants divers en para. De plus le premier noyau est substitué en méta de la fonction ester par un groupement polaire.

La formule générale de la famille de cristaux liquides suivant l'invention est la suivante:

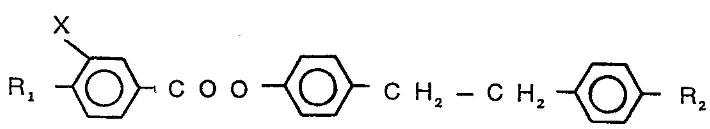

dans laquelle on a:

$R_1 = C_n H_{2n+1} O$ avec n entier de 1 à 10;
$R_2 = C_m H_{2m+1}$ avec m entier de 1 à 10 et
X = Br ou CN.

On donne ci-après le procédé général de fabrication de ces corps, des exemples de mode opératoire concernant les différentes étapes de synthèse, et enfin les propriétés mésomorphes de certains de ces corps selon l'invention.

*Procédé général de fabrication d'un cristal liquide selon l'invention*

a) on effectue la synthèse du phénol para-substitué à partir du chlorure de l'acide para-méthoxy-phénylacétique. On procède en trois étapes:

*Etape 1.1:* on effectue une réaction de Friedel et Crafts entre ledit chlorure d'acide et un alkylbenzène ou le bromobenzène:

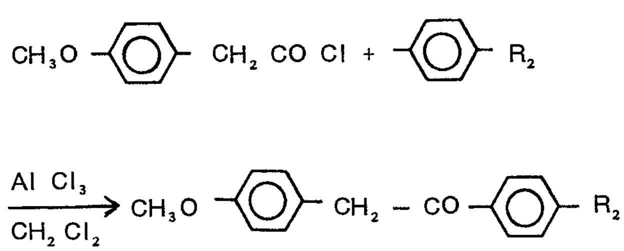

*Etape 1.2*: on effectue la déméthylation du produit obtenu à l'étape précédente:

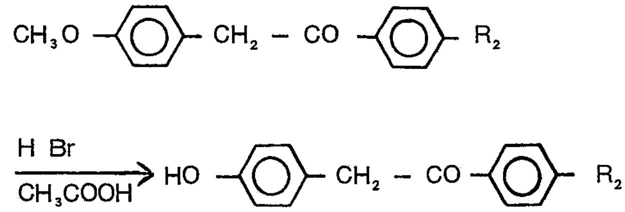


*Etape 1.3*: on effectue la réduction du produit obtenu à l'étape précédente par la réaction de Wolff-Kishner

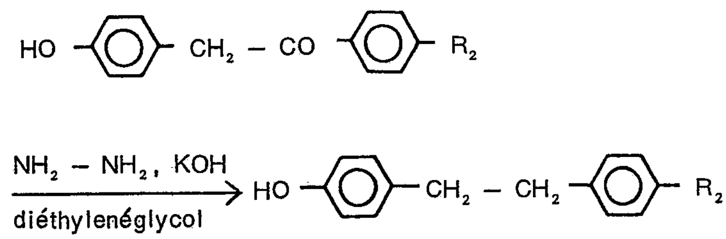


Le phénol para-substitué ainsi obtenu est le 4-hydroxy-4'-alkyl-phényléthane ou le 4-hydroxy-4'-bromophényléthane.

b) on effectue la synthèse du chlorure de l'acide p-alkoxy-benzoïque méta-substitué avec du brome. On procède en deux étapes:

*Etape 2.1*: on effectue une réaction de bromation d'un acide p-alkoxy benzoïque pour obtenir l'acide bromo-3 n-alkoxybenzoïque:

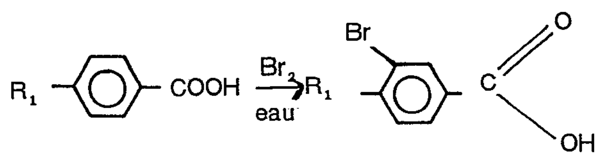


*Etape 2.2*: à partir de l'acide obtenu à l'étape précédente, on effectue la synthèse classique du chlorure de cet acide:

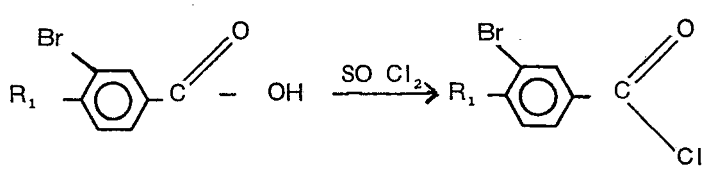


c) on effectue l'estérification du chlorure de l'acide bromo-3 n-alkoxy -4 benzoïque obtenu à l'étape (b) par le phénol obtenu à l'étape (a):

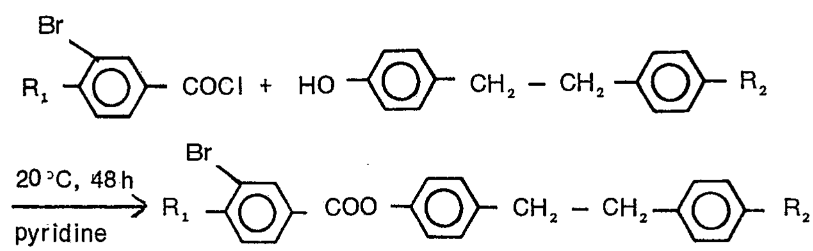


On obtient ainsi le 1-(3'-bromo-4'-alkoxy benzoyloxy phenyl) 2-alkylphényléthane qui est un cristal liquide de la famille selon l'invention.

d) pour obtenir les cristaux liquides de la famille selon l'invention qui soit méta-substitué avec le radical nitrile au lieu du brome, on effectue la substitution nucléophile du brome par le nitrile suivant la réaction classique:

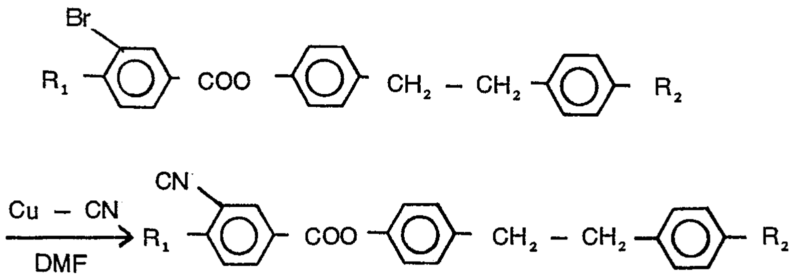


dans laquelle DMF représente la diméthylformamide.

*Modes opératoires:*
*Etape 1.1 (exemple):*

Synthèse de 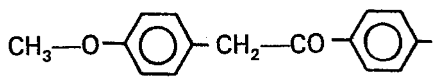 (4-méthoxy-4'-pentyl-déoxybenzoine):

On charge dans un réacteur d'un litre, 350 ml de $CH_2Cl_2$ et 67 g de Al $Cl_3$ (0,5 mole) par petite fraction. On agite et on refroidit le mélange à t° < 5°C. On fait couler goutte à goutte en agitant constamment, un mélange contennant 45 g de pentylbenzène (environ 0,3 mole), 55 g (0,35 mole) de

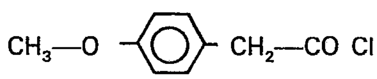

et 250 ml de $CH_2$ $Cl_2$ pendant une heure et demie. On laisse ensuite le mélange réagir à la température ambiante pendant deux heures puis on chauffe à reflux pour parfaire la réaction pendant une heure. On laisse alors le mélange refroidir à la température ambiante puis on le verse dans un mélange contenant 180 g de glace, 180 ml d'eau permutée et 180 ml de H Cl concentré. On décante. On lave la solution aqueuse deux fois avec du chloroforme. On réunit les fractions organiques et on les lave avec de l'eau permutée jusqu'à neutralité. On fait sécher la solution organique sur du $Na_2SO_4$ anhydre et on évapore le solvant à l'evaporateur rotatif. Le produit est recristallisé dans 120 ml d'éthanol. On obtient 56,2 g de produit qui fond à 62°C. Le rendement est de 63% environ.

*Etape 2.1 (exemple):*

Synthèse de 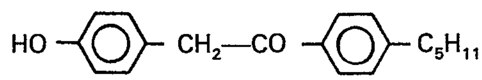 (4-hydroxy-4'-pentyldéoxybenzoine):

On fait dissoudre 9 g (0,03 mole) de

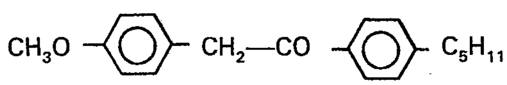

dans 100 ml d'acide acétique puis on ajoute 150 ml de H Br 48%. On porte le tout à reflux pendant 7 heures. On laisse le mélange refroidir à la température ambiante puis on le verse dans un mélange de 100 g d'eau et 100 g de glace. On agite pendant une demi-heure. On filtre et on fait la chromatographie sur silice avec l'éluant benzène-hexane 50%—50%. On obtient 1,2 g de produit de départ et 5,4 g de produit désiré qui fond à 112°C. Le rendement est de 73% environ.

*Etape 1.3 (exemple):*
Synthèse de 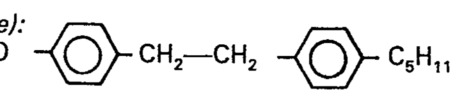 1-(4-hydroxyphényl) 2-(4'-pentylphényl) éthane:

On charge dans un erlenmeyer de 100 ml 3 g d'hydrazine, 10 ml de diéthylène-glycol et 4 g de KOH. On agite jusqu'à ce que toute la potasse soit dissoute. On ajoute alors 4,5 g (0,016 mole) de:

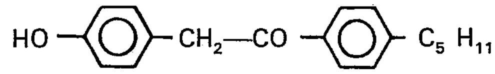

On chauffe le mélange à reflux pendant une heure au moyen d'un appareil *"Dean stark"* et d'un réfrigérant. On distille approximativement 3 ml de solvant et on maintient la température à 230°C pendant 3 heures. Après refroidissement, on neutralise le mélange avec une solution de 5 ml H Cl concentré dans 50 ml d'eau froide. On laisse agiter pendant une demiheure; puis on extrait la fraction organique avec 150 ml de benzène. On la fait sécher sur du $Na_2 SO_4$ anhydre, on évapore le solvant et on fait la chromatographie sur silice avec le benzène comme éluant. On obtient 2, 7 g de produit qui fond à 102°C. Le rendement est de 63%.

*Etape 2.1 (exemple)*:

Synthèse de l'acide bromo-3 octyloxy-4 benzoïque

Dans 180 ml d'eau permutée, on met en suspension 37,5 g (0,15 mole) d'acide p-octyloxy benzoïque. On porte à la température de milieu réactionnel entre 50°C et 55°C et l'on ajoute à cette température 8,7 ml (0,17 mole) de brome sur 7H30mn. Le produit est ensuite filtré, lavé à l'eau permutée et recristallisé dans l'éthanol. On obtient 37,9 g de produit pur de point de fusion 110°C.

*Etape (c) d'estérification:*

Synthèse de 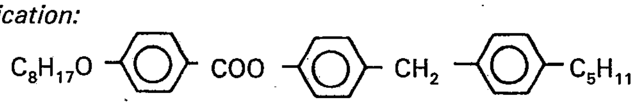 (ou 1-(3'-bromo 4'-octyloxybenzoyloxyphényl) 2-pentylphényléthane)

On fait réagir 540 mg (environ 0,002 mole) de

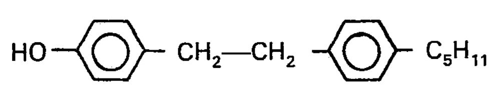

et 700 mg (environ 0,002 mole) de chlorure d'acide 3-bromo-4-octyloxybenzoïque (obtenu en chauffant à reflux l'acide avec $SO\ Cl_2$) dans 10 ml de pyridine, à la température ambiante pendant 48 heures. On verse alors le mélange réactionnel dans une solution contenant 10 ml de $H_2 SO_4$ concentré et 100 g de glace. On extrait la fraction organique avec l'éther (3 fois). On lave la fraction organique avec de l'eau (3 fois). On la fait sécher sur du $Na_2 SO_4$ anhydre. On évapore le solvant et on recristallise le produit dans l'éthanol. On obtient 850 mg de produit. Rendement: 73%.

*Etape (d) de substitution du brome par le nitrile (exemple)*

Synthèse de 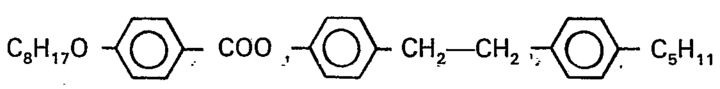 (ou 1-(3'cyano-4'-octyloxybenzoyloxyphényl) 2-pentylphényléthane)

On charge successivement dans un erlenmeyer: 0,24 g (environ 0,0027 mole) de Cu CN puis 1,5 ml de diméthylformamide (DMF) et 0,8 g (environ 0,014 mole) du 1-(3'-bromo-4'-octyloxybenzoyloxy-phényl)-2-pentylphényléthane. On porte le tout à 160°C pendant six heures en agitant vivement. Ensuite on laisse le mélange refroidir à la température ambiante. On le verse dans une solution de 0,7 g d'éthylène diamine dans 10 ml d'eau. On laisse agiter encore pendant une heure. On verse du benzène dans la solution afin de dissoudre et d'extraire le produit nitrilé. On filtre sur terre d'infusoire. On décante. On lave la fraction aqueuse avec du benzène. On réunit les fractions organiques. On les lave avec de l'eau jusqu'à neutralité. On fait sécher sur du $Na_2 SO_4$ anhydre. On évapore le solvant et on fait la chromatographie sur colonne avec comme éluant le mélange benzène 50% — hexane 50%. On recristallise le produit obtenu dans ce mélange de solvants. On recristallise le produit obtenu dans ce mélange de solvants. On obtient 450 mg de produit. Le rendement est de 62%.

*Propriétés mésomorphes des cristaux liquides selon l'invention:*

Le tableau I donne les propriétés de corps dans lesquels:

$$R_1 = C_n H_{2n+1} O \quad R_2 = C_5 H_{11} \text{ et } X = Br.$$

Les températures figurant dans le tableau sont exprimées en degrés Celsius.

TABLEAU I

| n | TEMPERATURES | | | | | | |
|---|---|---|---|---|---|---|---|
| | K | | $S_C$ | | N | | I |
| 1 | . | 113 | — | | . | (80) | . |
| 2 | . | 102 | — | | . | (96) | . |
| 4 | . | 84 | — | | . | 93 | . |
| 7 | . | 75 | — | (55) | . | 90 | . |
| 8 | . | 61 | — | (59) | . | 91,5 | . |

La légende des signes utilisés dans ce tableau et dans Les suivants est la suivante:

K : Phase cristalline
S : phase (s) smectique (s)
$S_A$, S, $S_C$ : phases smectiques A, C
N : phase nématique
I : phase liquide isoltrope
. : la phase existe
— : la phase n'existe pas.

Dans ce tableau, comme dans le suivant, les températures indiquées entre parenthèses correspondent à des transitions métastables.

Le tableau II donne les propriétés des cristaux liquides

$$R_1 = C_n H_{2n+1} O \quad R_2 = C_5 H_{11} \quad \text{et} \quad X = C N.$$

TABLEAU II

| n | K | | $S_A$ | | N | | I |
|---|---|---|---|---|---|---|---|
| 1 | . | 111,5 | — | | — | | . |
| 2 | . | 78 | | (72) | . | 90,5 | . |
| 4 | . | 91,5 | | 97,5 | — | | . |
| 7 | . | 71 | | 105 | — | | . |
| 8 | . | 65 | | 108 | — | | . |

*Propriétés des cristaux liquides selon l'invention et de leur mélange avec un cristal liquide connu*

On donne ci-après les constantes diélectriques dites "parallèle" ($\varepsilon /\!/$) et "perpendiculaire ($\varepsilon \perp$) ainsi que leur différence sur les cristaux liquides suivants:

Corps $A_1$: $C_8H_{17}O$ 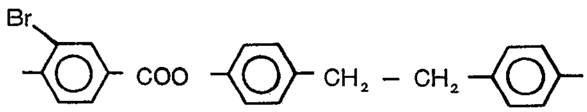 $C_5H_{11}$ à 70°C ;

Corps $A_2$: $C_8H_{17}O$ 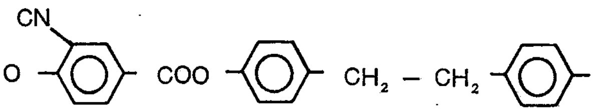 $C_5H_{11}$ en mélange avec le corps B.

Corps B: para-méthoxy benzoate de parapentylphenol à l'état mésomorphe.
Mélange M: contenant les corps $A_2$ et B dans le rapport de 1 à 9.

Le tableau III donne des constantes $\varepsilon/\!/$ et $\varepsilon\perp$ ainsi que leur différence ($\varepsilon/\!/ - \varepsilon\perp$) ou anisotropie diélectrique $\varepsilon_a$. Les mesures sont faites dans un champ magnétique d'orientation de 10 000 oersteds.

TABLEAU III

| Cristal Liquide | N (KHz) | $\varepsilon/\!/$ | $\varepsilon\perp$ | $\varepsilon_a$ |
|---|---|---|---|---|
| Corps $A_1$ (à 70°C) | 1 | 3,54 | 4,68 | – 1,14 |
| | 10 | 3,50 | 4,67 | – 1,17 |
| | 100 | 3,32 | 4,65 | – 1,33 |
| | 1000 | 3,28 | 4,80 | – 1,52 |
| Corps B (à 25°C) | 10 | 5,7 | 5,6 | + 0,1 |
| Mélange M (à 25°C) | 10 | 4,9 | 5,6 | – 0,7 |

N: fréquence de mesure.

L'anisotropie diélectrique du corps $A_2$ est d'environ — 6, ainsi que l'on peut le déduire par le calcul, dans l'hypothèse d'une combination proportionnelle des effets d'anisotropie.

Les résultats seraient encore intéressants pour un mélange contenant de 5 à 15% du corps $A_2$ au lieu de 10%.

Les cristaux liquides selon l'invention présentent donc soit des phases nématiques, soit des phases smetiques A, à des températures inférieures à 100°C, et avec des anisotropies diélectriques fortement négatives. D'autre part, étant donné leur structure chimique, ces cristaux liquides sont particulièrement stables.

Ils peuvent être utilisés en mélange entre eux ou avec d'autres cristaux liquides:

1. Dans des dispositifs de visualisation basés sur la diffusion dynamique de la lumière (nématiques négatifs);

2. Dans des dispositifs de visualisation à mémoire basés sur l'effet de champ (smectiques A négatifs).

**Revendications**

1. Cristal liquide à grande anisotropie diélectrique négative, caractérisé en ce qu'il répond à la formule:

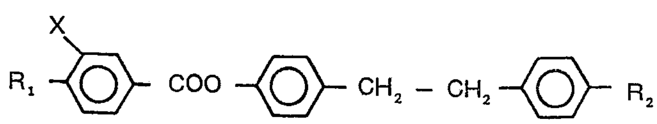

dans laquelle $R_1$ désigne un groupement alkoxy à n atomes de carbone, n étant un entier de 1 à 10;

$R_2$ désigne un groupement alkyl à m atomes de carbone, m étant un entier de 1 à 10;

X désigne le brome ou le groupement nitrile.

2. Cristal liquide suivant la revendication 1, caractérisé en ce que les symboles sont les suivants:

$$R_1 = C_8H_{17}O;\ R_2 = C_5H_{11};\ X = Br.$$

3. Cristal liquide suivant la revendication 1, caractérisé en ce que les symboles sont les suivants:

$$R_1 = C_8H_{17}O;\ R_2 = C_5H_{11};\ X = C\,N.$$

4. Mélange d'un premier cristal liquide suivant la revendication 1 avec un second cristal liquide.

5. Mélange suivant la revendication 4, caractérisé en ce que le second cristal liquide est le paraméthoxybenzoate de parapentylphénol.

6. Mélange suivant la revendication 5, caractérisé en ce qu'il comporte de 5 à 15% dudit premier cristal liquide.

7. Mélange suivant la revendication 5, caractérisé en ce que la premier cristal liquide est le 1 - (3'-cyano-4' octyloxybenzoyloxy-phényl) 2-pentylphényléthane.

8. Dispositif électro-optique caractérisé en ce qu'il comporte un cristal liquide suivant la revendication 1.

**Patentansprüche**

1. Flüssiger Kristall mit hoher negativer dielektrischer Anisotropie, dadurch gekennzeichnet, dass er der Formel:

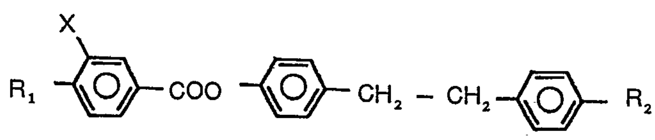

entspricht, wobei:

—$R_1$ eine n Kohlenstoffatome enthaltende Alkoxy-Gruppe darstellt und n eine der ganzen Zahlen von 1 bis 10 ist:

—$R_2$ eine m Kohlenstoffatome enthaltende Alkyl-Gruppe darstellt und m eine der ganzen Zahlen von 1 bis 10 ist, und

—X Brom oder die Nitrilgruppe darstellt.

2. Flüssiger Kristall nach Anspruch 1, dadurch gekennzeichnet, dass die Symbole jeweils die folgende Bedeutung haben:

$$R_1 = C_8H_{17}O;\ R_2 = C_5H_{11};\ X = Br.$$

3. Flüssiger Kristall nach Anspruch 1, dadurch gekennzeichnet, das die Symbole jeweils die folgende Bedeutung haben:

$$R_1 = C_8H_{17}O;\ R_2 = C_5H_{11};\ X = C{\equiv}N.$$

4. Mischung eines ersten flüssigen Kristalls nach Anspruch 1 mit einem zweiten flüssigen Kristall.

5. Mischung nach Anspruch 4, dadurch gekennzeichnet, dass der zweite flüssige Kristall Parapentylphenolparamethoxybenzoat ist.

6. Mischung nach Anspruch 5, dadurch gekennzeichnet, dass sie 5 bis 15% des ersten flüssigen Kristall enthält.

7. Mischung nach Anspruch 5, dadurch gekennzeichnet, dass der erste flüssige Kristall 1-(3'-cyano-4'-octyloxybenzoyloxyphenyl)-2-pentylphenyläthan ist.

8. Elektrooptische Vorrichtung, dadurch gekennzeichnet, dass sie einen flüssigen Kristall nach Anspruch 1 umfasst.

**Claims**

1. A liquid crystal having a high negative dielectric anisotropy, characterized in that it has the following formula:

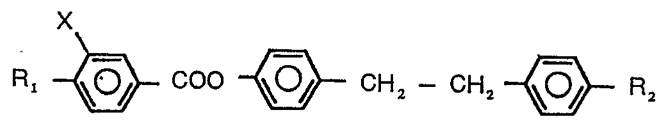

in which:

$R_1$ represents an alkoxy group having n carbon atoms, n being an integer from 1 to 10;
$R_2$ represents an alkyl group having m carbon atoms, m being an integer from 1 to 10;
X represents bromine or the nitrile group.

2. A liquid crystal according to claim 1, characterized in that the symbols are the following:

$$R_1 = C_8H_{17}O;\ R_2 = C_5H_{11};\ X = Br.$$

3. A liquid crystal according to claim 1, characterized in that the symbols are the following:

$$R_1 = C_8H_{17}O;\ R_2 = C_5H_{11};\ X = {\equiv}N.$$

4. A mixture of a first liquid crystal according to claim 1 with a second liquid crystal.

5. A mixture according to claim 4, characterized in that the second liquid crystal is parapentylphenol paramethoxybenzoate.

6. A mixture according to claim 5, characterized in that it comprises from 5 to 15% of the said first liquid crystal.

7. A mixture according to claim 5, characterized in that the first liquid crystal is 1-(3′-cyano-4′-octyloxybenzoyloxy-phenyl) 2-pentylphenylethane.

8. An electro-optical device characterized in that it comprises a liquid crystal according to claim 1.